(19) Europäisches Patentamt
European Patent Office
Office européen des brevets

(11) **EP 3 690 593 B1**

(12) **EUROPÄISCHE PATENTSCHRIFT**

(45) Veröffentlichungstag und Bekanntmachung des Hinweises auf die Patenterteilung:
**19.01.2022   Patentblatt 2022/03**

(21) Anmeldenummer: **20153767.7**

(22) Anmeldetag: **27.01.2020**

(51) Internationale Patentklassifikation (IPC):
**G05D 23/19** *(2006.01)*      **F24D 19/10** *(2006.01)*

(52) Gemeinsame Patentklassifikation (CPC):
**F25B 30/06; F24D 3/18; F24D 17/02; F24D 19/1072; F24D 19/1081; G05D 23/1919; G05D 23/1931;** F24D 2200/11; F24D 2200/123; F24D 2220/042; F24D 2220/044; F25B 2339/047; F25B 2700/2106; Y02B 10/40; Y02B 30/12

(54) **VERFAHREN ZUM BETRIEB EINES STEUERGERÄTS UND/ODER EINER WÄRMEPUMPENHEIZUNG, STEUERGERÄT UND WÄRMEPUMPENHEIZUNG**

CONTROL DEVICE, HEAT PUMP HEATING AND METHOD FOR OPERATING A CONTROL DEVICE AND / OR A HEAT PUMP HEATING

PROCÉDÉ DE FONCTIONNEMENT D'UN APPAREIL DE COMMANDE ET/OU D'UN CHAUFFAGE DE POMPE À CHALEUR, APPAREIL DE COMMANDE ET CHAUFFAGE DE POMPE À CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2019   DE 102019201252**

(43) Veröffentlichungstag der Anmeldung:
**05.08.2020   Patentblatt 2020/32**

(73) Patentinhaber: **Robert Bosch GmbH**
**70442 Stuttgart (DE)**

(72) Erfinder:
• **Tollsten, Mikael**
  **57393 Tranas (SE)**
• **Eklund, Gunnar**
  **57392 Tranas (SE)**
• **Lindroth, Lars**
  **57334 Tranas (SE)**

(56) Entgegenhaltungen:
**DE-A1-102010 053 211**

EP 3 690 593 B1

**Beschreibung**

Die Erfindung betrifft ein Verfahren zum Betrieb eines Steuergeräts und/oder einer Wärmepumpenheizung gemäß Patentanspruch 1, ein Steuergerät gemäß Patentanspruch 10 und eine Wärmepumpenheizung gemäß Patentanspruch 11.

Stand der Technik

Es ist eine Wärmepumpenheizung mit einem Steuergerät und einem Wärmepumpenkreislauf bekannt, wobei der Wärmepumpenkreislauf einen Verdichter, einen Kondensator, einen Verdampfer, eine Drossel und ein Kältemittel aufweist. Der Kondensator ist primärseitig mit einem in einem Erdreich vergrabenen Flächenwärmetauscher verbunden. Im Wärmepumpenkreislauf zirkuliert das Kältemittel zwischen dem Kondensator und dem Verdampfer. Das Steuergerät steuert den Verdichter auf Grundlage einer Heizkurve. Die Heizkurve ist vordefiniert in dem Steuergerät gespeichert.

In der DE 10 2010 053 211 A1 wird ein Verfahren zum Betreiben eines Heizungssystems angegeben, wobei das Heizungssystem eine Wärmequelle und in mindestens einem Raum mindestens einen Raumwärmetauscher aufweist, der verbunden ist mit der Wärmequelle und thermostatisch gesteuert wird durch ein Steuerventil, wobei die Wärmequelle ein Heizungsfluid ausgibt mit einer Versorgungstemperatur, wobei die Versorgungstemperatur gesteuert wird entsprechend einer Wärmekurve, wobei die Wärmekurve eine Beziehung zeigt zwischen der Versorgungstemperatur und einer Außentemperatur, wobei das Verfahren den Schritt des Einstellens der Wärmekurve aufweist, dadurch gekennzeichnet, dass das Verfahren weiterhin aufweist die Schritte des Bestimmens der emittierten Wärme in dem Raum, Vergleichen der emittierten Wärme mit einem maximalen Pegel einer Wärmeemission, Vermindern der Steigung der Wärmekurve, wenn die emittierte Wärme niedriger ist als ein erster vorbestimmter Bruchteil des maximalen Pegels der Wärmeemission, Vergrößern der Steigung der Wärmekurve, wenn die emittierte Wärme oberhalb eines zweiten vorbestimmten Bruchteils des maximalen Pegels der Wärmeemission ist, und Belassen der Wärmekurve, wenn die emittierte Wärme in einem Bereich zwischen dem ersten vorbestimmten Bruchteil und dem zweiten vorbestimmten Bruchteil des maximalen Pegels der Wärmeemission ist.

Offenbarung der Erfindung

Es ist Aufgabe der Erfindung, ein Verfahren zur automatischen Adaption zum Betrieb eines Steuergeräts und/oder einer Wärmepumpenheizung, ein verbessertes Steuergerät und eine verbesserte Wärmepumpenheizung bereitzustellen.

Diese Aufgabe wird mittels eines Verfahrens gemäß Patentanspruch 1, mittels eines Steuergeräts gemäß Patentanspruch 11 und einer Wärmepumpenheizung gemäß Patentanspruch 12 gelöst. Vorteilhafte Ausführungsformen sind in den abhängigen Ansprüchen angegeben.

Es wurde erkannt, dass ein verbessertes Verfahren, ein verbessertes Steuergerät und eine verbesserte Wärmepumpenheizung dadurch bereitgestellt werden kann, dass ein gemittelter Heizvolumenstrom eines Heizkreislaufs der Wärmepumpenheizung bestimmt wird, vorzugsweise auf Grundlage eines über einen vordefinierten ersten Zeitraum ermittelten und/oder aufgezeichneten Heizvolumenstroms eines Heizkreislaufs der Wärmepumpenheizung, wobei der gemittelte Heizvolumenstrom mit einem vordefinierten ersten Schwellenwert in einem ersten Vergleich verglichen wird, dass eine gemittelte Außentemperatur bestimmt, vorzugsweise auf Grundlage einer über den vordefinierten ersten Zeitraum in regelmäßigem Zeitabstand ermittelten und/oder aufgezeichneten Außentemperatur außerhalb des Gebäudes, wobei die gemittelte Außentemperatur mit einem vordefinierten zweiten Schwellenwert verglichen wird, wobei in Abhängigkeit des Ergebnisses des ersten Vergleichs und bei Unterschreiten des vordefinierten zweiten Schwellenwerts eine vordefinierte Heizkurve der Wärmepumpenheizung auf Grundlage der gemittelten Außentemperatur und insbesondere des vordefinierten ersten Parameters adaptiert wird, wobei auf Grundlage der adaptierten Heizkurve die Wärmepumpenheizung gesteuert wird.

Diese Ausgestaltung hat den Vorteil, dass selbstlernend die Heizkurve angepasst wird und dabei ein Nutzungsverhalten berücksichtigt wird. Das Verfahren ist ferner besonders einfach ausgebildet und kann daher beispielsweise im Rahmen eines Updates auch in bereits bestehende Steuergeräte eingespielt werden. Diese Ausgestaltung hat den Vorteil, dass auf einfache Art die Heizkurve wetterbasiert angepasst werden kann.

In einer weiteren Ausführungsform weist die vordefinierte Heizkurve eine Vorlauftemperatur wenigstens einen Sollwert auf, wobei bei Unterschreiten des vordefinierten zweiten Schwellenwerts durch die gemittelte Außentemperatur der wenigstens eine Sollwert abgesenkt wird, wobei eine adaptierte Heizkurve auf Grundlage des abgesenkten Sollwerts bestimmt wird.

In einer weiteren Ausführungsform weist die vordefinierte Heizkurve wenigstens einen Sollwert auf, wobei bei Unterschreiten des vordefinierten zweiten Schwellenwerts durch die gemittelte Außentemperatur der wenigstens eine Sollwert angehoben wird, wobei eine adaptierte Heizkurve auf Grundlage des angehobenen Sollwerts bestimmt wird.

In einer weiteren Ausführungsform wird, vorzugsweise indem ein mittlerer Wärmebedarf der Wärmepumpenheizung über den ersten Zeitraum ermittelt wird, die gemittelte Außentemperatur mit einer vordefinierten unteren Grenztemperatur verglichen, wobei bei Unterschreiten der vordefinierten unteren Grenztemperatur durch die gemittelte Außentemperatur auf Grundlage einer vordefinierten Auslegungs-Außenlufttemperatur der Wärmepumpenheizung, der gemittelten Außentemperatur und des mittleren Wärmebedarfs sowie eines zweiten Parameters, ein maximaler Leistungsbedarf der Wärmepumpenheizung im ersten Zeitraum ermittelt wird.

In einer weiteren Ausführungsform wird der ermittelte maximale Leistungsbedarf mit dem mittleren Wärmebedarf der Wärmepumpenheizung verglichen, wobei bei einem Abweichen des ermittelten maximalen Leistungsbedarfs von dem mittleren Wärmebedarf um mindestens einen vordefinierten vierten Schwellenwert der ermittelte maximale Leistungsbedarf auf Grundlage eines vordefinierten vierten Parameters angepasst wird.

In einer weiteren Ausführungsform wird für einen zweiten Zeitraum, der sich über wenigstens zwei aufeinanderfolgende erste Zeiträume erstreckt, auf Basis des zu dem jeweils ersten Zeitraum zugeordneten ermittelten maximalen Leistungsbedarfs ein gemittelter maximaler Leistungsbedarf über den zweiten Zeitraum ermittelt, wobei bei Abweichen des ermittelten maximalen Leistungsbedarfs mittleren Wärmebedarf um mindestens einen vordefinierten vierten Schwellenwert der ermittelte maximale Leistungsbedarf durch den ermittelten gemittelten maximalen Leistungsbedarf ersetzt wird.

In einer weiteren Ausführungsform wird auf Grundlage eines vordefinierten dritten Parameters, des maximalen gemittelten Leistungsbedarfs und der gemittelten Außentemperatur ein erwarteter mittlerer Leistungsbedarf der Wärmepumpenheizung ermittelt wird, wobei der mittleren Wärmebedarf des Wärmepumpenkreislaufs mit dem erwarteten mittleren Leistungsbedarf verglichen wird, wobei bei Überschreitung des mittleren Wärmebedarfs durch den erwarteten mittleren Leistungsbedarf der wenigstens eine Sollwert der Heizkurve zu dem adaptierten Sollwert angehoben wird, wobei auf Grundlage des angehobenen Sollwerts die adaptierte Heizkurve bestimmt wird.

In einer weiteren Ausführungsform wird auf Grundlage des maximalen Leistungsbedarfs, einer vordefinierten Temperaturdifferenz zwischen einer Vorlauftemperatur und einer Rücklauftemperatur und eines vordefinierten fünften Parameters ein Nennvolumenstrom in einem Heizkreislauf ermittelt, wobei der erste Schwellenwert dem halben Nennvolumenstrom entspricht.

In einer weiteren Ausführungsform erstreckt sich der vordefinierte erste Zeitraum über einen Zeitraum eines Tages oder über einen Zeitraum von 24 Stunden.

Ein verbessertes Steuergerät ist ausgebildet, das oben beschriebene Verfahren durchzuführen. Eine verbesserte Wärmepumpenheizung weist das Steuergerät auf.

Die Wärmepumpenheizung einen Heizkreislauf und einen Wärmepumpenkreislauf auf, wobei das Steuergerät eine Steuereinrichtung, einen mit der Steuereinrichtung verbundenen Datenspeicher und eine mit der Steuereinrichtung verbundene Schnittstelle aufweist, wobei in dem Datenspeicher der vordefinierte erste Schwellenwert und die vordefinierte Heizkurve abgespeichert sind, wobei der Heizkreislauf ein in einem Kreislauf zirkulierbares Wärmeträgermedium umfasst, wobei das Wärmeträgermedium thermisch mit dem Wärmepumpenkreislauf verbunden und ausgebildet ist, Wärme zur Beheizung wenigstens eines Raums eines Gebäudes vom Wärmepumpenkreislauf zu übertragen, wobei die Steuereinrichtung ausgebildet ist, den Wärmepumpenkreislauf auf Grundlage der adaptierten Heizkurve zu steuern.

In einer weiteren Ausführungsform weist die Wärmepumpenheizung eine Heizvolumenstromermittlungseinheit auf, wobei die Heizvolumenstromermittlungseinheit mit der Schnittstelle verbunden und ausgebildet ist, einen Heizvolumenstrom des Wärmeträgermediums zu ermitteln und eine Information über den ermittelten Heizvolumenstrom der Steuereinrichtung bereitzustellen, wobei die Steuereinrichtung ausgebildet ist, auf Grundlage des ermittelten Heizvolumenstroms einen gemittelten Heizvolumenstrom über den vordefinierten ersten Zeitraum zu bestimmen.

In einer weiteren Ausführungsform weist die Wärmepumpenheizung einen mit der Schnittstelle verbundenen Außentemperatursensor auf, wobei der Außentemperatursensor ausgebildet ist, eine Außentemperatur zu messen und eine Information über die gemessene Außentemperatur der Steuereinrichtung bereitzustellen, wobei die Steuereinrichtung ausgebildet ist, über einen vordefinierten ersten Zeitraum die Außentemperatur zu erfassen und auf Grundlage der ermittelten Außentemperatur über den ersten Zeitraum die gemittelte Außentemperatur über den vordefinierten ersten Zeitraum zu bestimmen.

Nachfolgend wird die Erfindung anhand von Figuren näher erläutert. Dabei zeigen:

Figur 1    eine schematische Darstellung einer Wärmepumpenheizung;

Figur 2    ein Diagramm einer vordefinierten Heizkurve; und

Figur 3    ein Ablaufdiagramm eines Verfahrens zum Betrieb der in Figur 1 gezeigten Wärmepumpenheizung.

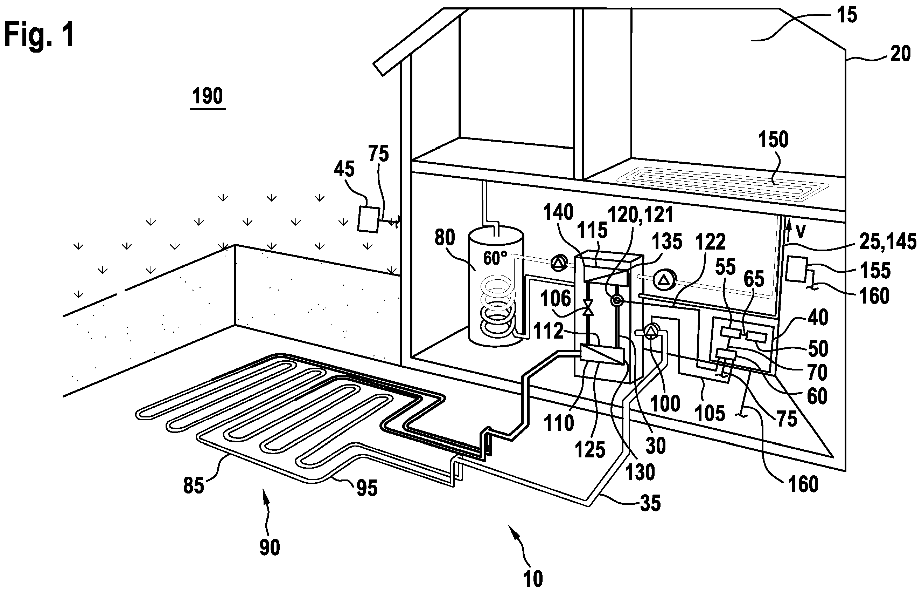

Figur 1 zeigt eine schematische Darstellung einer Wärmepumpenheizung 10.
Die Wärmepumpenheizung 10 ist ausgebildet, in aktiviertem Zustand wenigstens einen Raums 15 eines Gebäudes 20 zu beheizen. Die Wärmepumpenheizung 10 umfasst einen Heizkreislauf 25, einen Wärmepumpenkreislauf 30, einen Solekreislauf 35, ein Steuergerät 40, eine Heizvolumenstromermittlungseinheit 155 und einen Außentemperatursensor 45.

Das Steuergerät 40 weist einen Datenspeicher 50, eine Steuereinrichtung 55 und eine Schnittstelle 60 auf. Der Datenspeicher 50 ist mittels einer ersten Verbindung 65 mit der Steuereinrichtung 55 verbunden. Die Schnittstelle 60 ist mittels einer zweiten Verbindung 70 mit der Steuereinrichtung 55 verbunden.

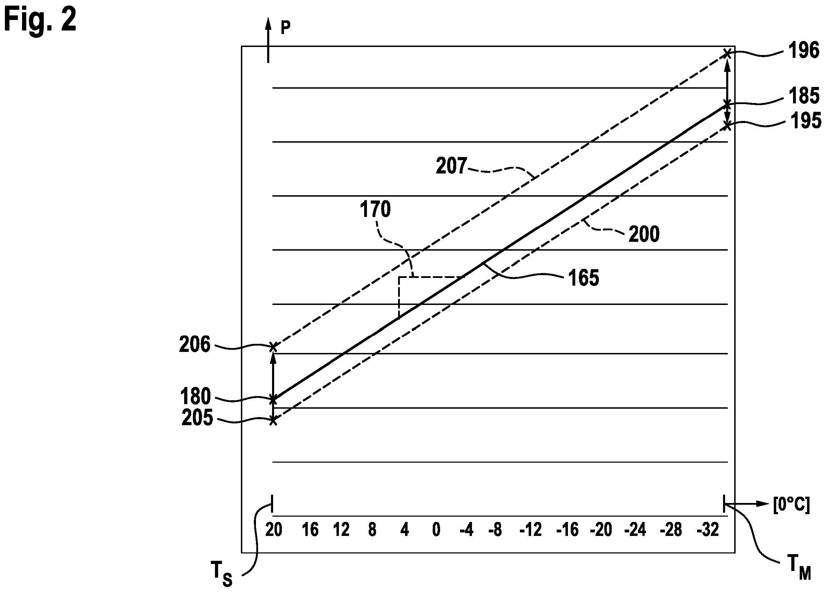

In dem Datenspeicher 50 ist ein vordefinierter erster Schwellenwert S1, ein vordefinierter zweiter Schwellenwert S2, ein vordefinierter dritter Schwellenwert S3 und ein vordefinierter vierter Schwellenwert S4 abgelegt. Ferner ist in dem Datenspeicher 50 eine vordefinierte Heizkurve 165 abgespeichert. Eine vordefinierte beispielhaft ausgebildete Heizkurve 165 ist in Figur 2 dargestellt. Des Weiteren ist im Datenspeicher 50 eine vordefinierte Grenztemperatur TG abgespeichert.

Die vordefinierte Grenztemperatur kann beispielsweise ein Außentemperaturmittelwert am Aufstellungsort der Wärmepumpenheizung 10 sein und beispielsweise 5°C betragen. Der erste Schwellenwert S1 spiegelt einen vordefinierten Heizvolumenstrom des dritten Wärmeträgermediums 145 im Heizkreislauf 25 wider. Der vordefinierte zweite Schwellenwert S2 kann ein Tagesmittelwert einer Außentemperatur am Aufstellungsort der Wärmepumpenheizung 10 sein und beispielsweise 10°C betragen. Der zweite Schwellenwert S2 weist somit einem Wert auf der größer ist als die Grenztemperatur auf.

In dem Datenspeicher 50 ist ferner ein vordefinierter vorangegangener erster Zeitraum und vorzugsweise ein vordefinierter zweiter Zeitraum abgelegt. Der zweite Zeitraum ist länger als der erste Zeitraum. Der erste Zeitraum erstreckt sich beispielhaft über einen Tag, beispielsweise beginnend bei 0:00 Uhr und endend bei 23:59 Uhr oder über die letzten 24 Stunden (beispielsweise von Montag 7:00 Uhr bis Dienstag 6:59). Der zweite vordefinierte Zeitraum erstreckt sich über beispielsweise die letzten vorangegangenen 30 Tage, wobei der erste Zeitraum in dem zweiten Zeitraum liegt.

Ferner ist im Datenspeicher 50 ein erster bis sechster vordefinierter Parameter abgelegt. Der erste bis sechste Parameter kann als mathematische Formel und/oder als Algorithmus und/oder als Computerprogramm und/oder als tabellarische Zuordnung und/oder als Kennfeld ausgebildet sein.

Des Weiteren ist ein vordefinierter maximaler Leistungsbedarf der Wärmepumpenheizung 10, eine vordefinierte geographisch abhängige Auslegungs-Außenlufttemperatur und einer vordefinierten Heizgrenztemperatur im Datenspeicher 50 abgelegt. Ferner ist im Datenspeicher 50 eine Mindesttemperatur abgelegt. Die Heizgrenztemperatur entspricht dabei der Außentemperatur am Aufstellungsort, unterhalb der die Wärmepumpenheizung 10 zur Beheizung des Gebäudes aktiviert wird.

Der Außentemperatursensor 45 ist in der Ausführungsform außerhalb des Gebäudes 20 angeordnet. Der Außentemperatursensor 45 ist mittels einer dritten Verbindung 75 mit der Schnittstelle 60 verbunden. Zusätzlich kann die Wärmepumpenheizung 10 einen Brauchwasserspeicher 80 aufweisen, wobei der Brauchwasserspeicher 80 thermisch mit dem Wärmepumpenkreislauf 30 verbunden ist.

Der Solekreislauf 35 weist einen ersten Wärmetauscher 85 auf. Der erste Wärmetauscher 85 ist beispielhaft in einem Erdreich 90 eingegraben. Das Erdreich 90 bildet in der Ausführungsform eine Wärmequelle aus. Der Solekreislauf 35 ist in der Ausführungsform beispielhaft als geschlossener Kreislauf ausgebildet. In dem Solekreislauf 35 zirkuliert ein erstes Wärmeträgermedium 95. Das erste Wärmeträgermedium 95 kann wenigstens Wasser und/oder Sole aufweisen. Des Weiteren umfasst der Solekreislauf 35 eine Förderpumpe 100. Die Förderpumpe 100 ist mittels einer vierten Verbindung 105 mit der Schnittstelle 60 verbunden. Auch ist denkbar, dass auf den Solekreislauf 35 verzichtet wird und der Wärmepumpenkreislauf 30 beispielsweise als Umgebungsluft als Wärmequelle nutzt.

Der Wärmepumpenkreislauf 30 weist eine Drossel 106, einen Verdampfer 110, einen Kondensator 115 und einen Verdichter 120 auf. Der Wärmepumpenkreislauf 30 ist mit einem zweiten Wärmeträgermedium 121 befüllt. Das zweite Wärmeträgermedium 121 kann beispielsweise eines der folgenden Kältemittel umfassen: R134a, R744, R600, R600a, R290. Der Verdichter 120 ist mittels einer fünften Verbindung 122 mit der Schnittstelle 60 des Steuergeräts 40 verbunden.

Der Verdampfer 110 weist eine erste Primärseite 125 und eine mit der ersten Primärseite 125 thermisch gekoppelte erste Sekundärseite 130 auf. Ferner weist der Kondensator 115 eine zweite Primärseite 135 und eine mit der zweiten Primärseite 135 thermisch gekoppelte zweite Sekundärseite 140 auf.

Die erste Primärseite 125 ist fluidisch mit dem Solekreislauf 35 verbunden und mit dem ersten Wärmeträgermedium 95 befüllt. Die zweite Sekundärseite 140 ist mit dem zweiten Wärmeträgermedium 121 befüllt und ist stromabwärtsseitig der Drossel 106 und stromaufwärtsseitig des Verdichters 120 angeordnet. Stromabwärtsseitig des Verdichters 120 und stromaufwärtsseitig der Drossel 106 ist die zweite Primärseite 135 angeordnet. Die zweite Sekundärseite 140 ist fluidisch mit dem Heizkreislauf 25 verbunden.

Der Heizkreislauf 25 kann beispielsweise mit einem dritten Wärmeträgermedium 145 befüllt sein. Der Heizkreislauf 25 kann ein oder mehrere zweite Wärmetauscher 150 umfassen, wobei der zweite Wärmetauscher 150 in dem Raum 15 des Gebäudes 20 angeordnet ist. Dabei ist der zweite Wärmetauscher 150 fluidisch mit der zweiten Sekundärseite 140 des Kondensators 115 verbunden. Im Heizkreislauf 25 zirkuliert das dritte Wärmeträgermedium 145. Ebenso kann der Brauchwasserspeicher 80 mit der zweiten Sekundärseite 140 verbunden sein.

Die Heizvolumenstromermittlungseinheit 155 kann beispielsweise einen Durchflusssensor in einem Vorlauf und/oder in einem Rücklauf des Heizkreislaufs 25 aufweisen. Auch kann die Heizvolumenstromermittlungseinheit 155 einen ersten Temperatursensor an einem Vorlauf und einen zweiten Temperatursensor an einem Rücklauf des Heizkreislaufs 25 aufweisen, wobei die Heizvolumenstromermittlungseinheit 155 ausgebildet ist, auf Grundlage einer Temperaturdifferenz zwischen dem ersten und zweiten Temperatursensor einen Heizvolumenstrom des dritten Wärmeträgermediums 145 im Heizkreislauf 25 zu ermitteln. Die Heizvolumenstromermittlungseinheit 155 ist mittels einer sechsten Verbindung 160 mit der Schnittstelle 60 verbunden.

In der Ausführungsform ist die erste bis sechste Verbindung 65, 70, 75, 105, 122, 160 als Datenverbindung ausgebildet. Die Datenverbindung kann drahtlos oder drahtgestützt erfolgen. Alternativ kann auch die vierte und/oder fünfte Verbindung 105, 122 als Leistungsverbindung ausgebildet sein. Dabei wird von einer nicht dargestellten elektrischen Energiequelle elektrische Energie zum Antrieb des Verdichters 120 und/oder der Förderpumpe 100 über die Schnittstelle 60 bereitgestellt.

Im Betrieb der Wärmepumpenheizung 10 ist der Verdichter 120 und die Förderpumpe 100 aktiviert. Dabei fördert die Förderpumpe 100 das erste Wärmeträgermedium 95 im Kreislauf. Dabei nimmt im ersten Wärmetauscher 85 das erste Wärmeträgermedium 95 Wärme auf. Die Förderpumpe 100 fördert das erwärmte erste Wärmeträgermedium 95 an die erste Primärseite 125. Ferner fördert der Verdichter 120 das zweite Wärmeträgermedium 121 zwischen dem Verdampfer 110 und dem Kondensator 115 im Kreislauf. Dabei nimmt das zweite Wärmeträgermedium 121 an der ersten Sekundärseite 130 Wärme von dem ersten Wärmeträgermedium 95 auf. Der Verdichter 120 fördert das erwärmte zweite Wärmeträgermedium 121 zu der zweiten Primärseite 135 des Kondensators 115. Im Heizkreislauf 25 zirkuliert das dritte Wärmeträgermedium 145. An der zweiten Sekundärseite 140 wird das dritte Wärmeträgermedium 145 durch das zweite Wärmeträgermedium 121 erwärmt. Die Wärme wird am zweiten Wärmetauscher 150 an den Raum 15 abgegeben.

Figur 2 zeigt ein Diagramm mit der im Datenspeicher 50 abgelegten vordefinierten Heizkurve 165.

Die Heizkurve 165 ist beispielhaft als linear ansteigender Graph einer Vorlauftemperatur P aufgetragen über einer Außentemperatur T ausgebildet. Mit abnehmender Außentemperatur T steigt die Vorlauftemperatur P beispielsweise linear an. Die Vorlauftemperatur P ist dabei die Temperatur, mit der das dritte Wärmeträgermedium 145 ausgangsseitig die zweite Sekundärseite 140 und den zweiten Wärmetauscher 150 verlässt.

Die Heizkurve 165 kann auch andersartig ausgebildet sein. So kann beispielsweise die Heizkurve 165 im Bereich um 0 °C Außentemperatur eine Überhöhung 170 (strichliert in Figur 2 dargestellt) aufweisen. Die Überhöhung 170 spiegelt dabei eine Erhöhung der Vorlauftemperatur P im Bereich um den 0 °C-Punkt wider.

Die Heizkurve 165 ist mittels zweier Sollwerte 180, 185 und einer Funktion definiert. Die Funktion kann eine Geradengleichung sein. Die Funktion kann auch anders gewählt sein. Die Sollwerte 180, 185 erfüllen die Funktion. Dabei ist einem als ersten Sollwert ausgebildeten Fußpunkt 180 auf der Ordinate die Heizgrenztemperatur und einem als zweiten Sollwert 185 ausgebildeten oberen Endpunkt 185 ist die Auslegungs-Außenlufttemperatur auf der Ordinate zugewiesen.

Die vordefinierte Heizkurve 165 erstreckt sich dabei in der Ausführungsform als Gerade zwischen dem Fußpunkt 180 und dem oberen Endpunkt 185. Der Graph kann auch zwischen dem Fußpunkt 180 und dem oberen Endpunkt 185 einen anderen Verlauf aufweisen. In diesem Fall ist die Heizkurve 165 neben den zwei Sollwerten 180, 185 auch durch weitere Werte, eine Funktion oder andersartig definiert.

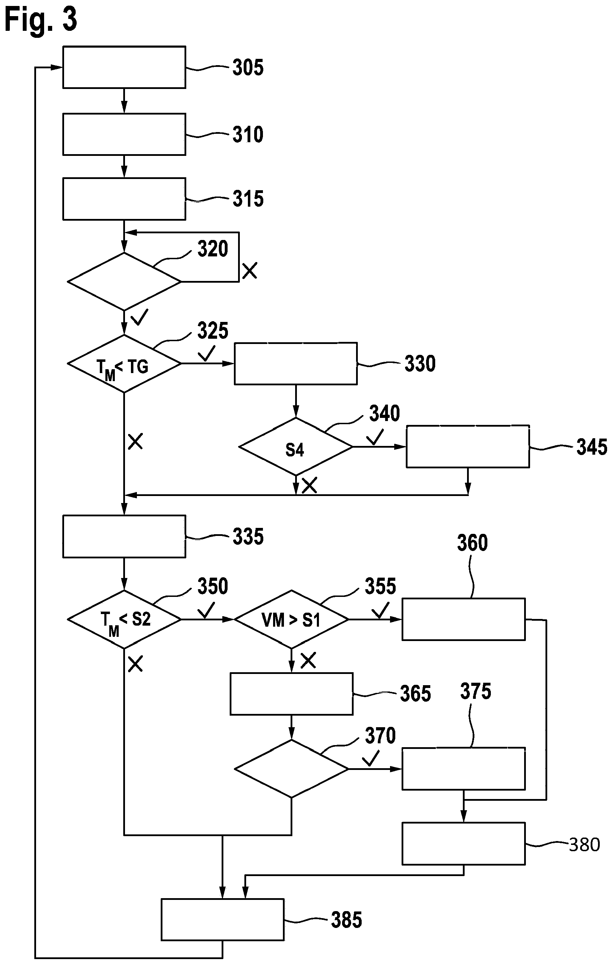

Figur 3 zeigt ein Ablaufdiagramm eines Verfahrens zum Betrieb der in Figur 1 gezeigten Wärmepumpenheizung 10 auf Grundlage der in Figur 2 gezeigten Heizkurve 165.

In Figur 3 sind die Erfüllung einer Bedingung mittels eines Häkchens und die Nichterfüllung der Bedingung mittels eines Kreuzchens symbolisch markiert.

In einem ersten Verfahrensschritt 305 misst der Außentemperatursensor 45 eine Außentemperatur T außerhalb des Gebäudes 20. Die Außentemperatur T entspricht einer Temperatur einer Umgebung 190 des Gebäudes 20. Der Außentemperatursensor 45 stellt über die dritte Verbindung 75 ein zur Außentemperatur T korrelierendes Temperatursignal über die dritte Verbindung 75 der Schnittstelle 60 bereit. Die Schnittstelle 60 erfasst das Temperatursignal und stellt das Temperatursignal über die zweite Verbindung 70 der Steuereinrichtung 55 bereit. Die Steuereinrichtung 55 erfasst das Temperatursignal. Die Steuereinrichtung 55 speichert das Temperatursignal mit einer ersten Zeitinformation in dem Datenspeicher 50 ab. Die erste Zeitinformation korreliert beispielsweise mit einer Messzeit, zu der der Außentemperatursensor 45 die Außentemperatur T gemessen hat.

Über das vordefinierte erste Zeitintervall, beispielsweise über einen Tag hinweg, wird in regelmäßigem Zeitabstand, beispielsweise im 5-Minutentakt, der erste Verfahrensschritt 305 wiederholt. Über das erste Zeitintervall ermittelt die Steuereinrichtung 55 einen Verlauf der Außentemperatur T über die Zeit.

Ferner ermittelt die Heizvolumenstromermittlungseinheit 155 einen aktuellen Heizvolumenstrom V des dritten Wärmeträgermediums 145 im Heizkreislauf 25. Der aktuelle Heizvolumenstrom V kann beispielsweise mittels des Durchflusssensors gemessen werden. Die Heizvolumenstromermittlungseinheit 155 stellt ein zum aktuellen Heizvolumenstrom V korrelierendes Heizvolumenstromsignal über die sechste Verbindung 160 der Schnittstelle 60 bereit. Die Schnittstelle 60 leitet das erfasste Heizvolumenstromsignal über die zweite Verbindung 70 an die Steuereinrichtung 55 weiter. Die Steuereinrichtung 55 erfasst das Heizvolumenstromsignal und legt den ermittelten aktuellen Heizvolumenstrom V mit einer zweiten Zeitinformation in dem Datenspeicher 50 ab. Die zweite Zeitinformation korreliert dabei mit einer Messzeit des Heizvolumenstroms V. Von besonderem Vorteil kann hierbei sein, wenn die zweite Zeitinformation und die erste Zeitinformation im Wesentlichen identisch sind.

Auch die Erfassung des Heizvolumenstroms V des Heizkreislaufs 25 wird ebenso wie die Erfassung der Außentemperatur T in regelmäßigem Zeitabstand wiederholt. Der Zeitabstand zwischen den zwei Messungen bei der Heizvolumenstromermittlungseinheit 155 kann identisch zu dem Zeitabstand zwischen zwei Messungen der Außentemperatur T sein.

In einem zweiten Verfahrensschritt 310, der auf den ersten Verfahrensschritt 305 folgt, wird nach Ablauf des ersten Zeitintervalls auf Grundlage der ermittelten Außentemperaturen T über den ersten Zeitraum durch die Steuereinrichtung 55 eine gemittelte Außentemperatur TM über den vordefinierten ersten Zeitraum bestimmt. Die gemittelte Außentemperatur TM kann beispielsweise mittels eines arithmetischen Mittels, eines Medians oder eines geometrischen Mittels bestimmt werden. Selbstverständlich sind auch andere Methoden zur Bestimmung der gemittelten Außentemperatur TM denkbar.

Die Steuereinrichtung 55 speichert die ermittelte gemittelte Außentemperatur TM für den ersten Zeitraum mit einer Zuordnung, insbesondere mit einer dritten Zeitinformation, zu dem ersten Zeitraum, beispielsweise mit einer Zuordnung zu dem Tag, an dem die Außentemperaturen T, auf deren Basis die gemittelte Außentemperatur TM ermittelt wurde, gemessen wurden.

Ferner ermittelt im zweiten Verfahrensschritt 310 die Steuereinrichtung 55 auf Grundlage der im Datenspeicher 50 abgelegten Heizvolumenstrominformationen über den ersten Zeitraum einen gemittelten Heizvolumenstrom VM des Heizkreislaufs 25 über den ersten Zeitraum. Die Steuereinrichtung 55 legt den gemittelten Heizvolumenstrom VM für den ersten Zeitraum im Datenspeicher 50 zusätzlich mit einer Zuordnung zu einer vierten Zeitinformation für den ersten Zeitraum, beispielsweise den Tag, an dem die unterschiedlichen Werte des Heizvolumenstroms V zur Ermittlung des gemittelten Heizvolumenstroms VM erfasst wurden, mit in dem Datenspeicher 50 ab.

In einem dritten Verfahrensschritt 315, der parallel zum ersten und zweiten Verfahrensschritt 305, 310 oder sequentiell auf den dritten Verfahrensschritt 315 folgend erfolgt, ermittelt die Steuereinrichtung 55 eine kumulierte gelieferte Heizenergie des Wärmepumpenkreislaufs 30 über den ersten Zeitraum. Die kumulierte gelieferte Heizenergie kann beispielsweise durch Aufsummieren einer durch den Wärmepumpenkreislauf 30 über den ersten Zeitraum an den Heizkreislauf 25 gelieferten Wärme (beispielsweise ermittels auf Basis einer Vorlauftemperatur, einer Rücklauftemperatur und des Heizvolumenstroms) ermittelt werden. Auch kann beispielsweise die kumulierte gelieferte Heizenergie auch indirekt durch die in den Verdichter 120 eingeführte elektrische Energie zum Betrieb des Wärmepumpenkreislaufs 30 ermittelt werden. Die ermittelte kumuliert gelieferte Heizenergie wird durch die Steuereinrichtung 55 mit einer Zuordnung einer fünften Zeitinformation zu dem entsprechenden ersten Zeitraum in dem Datenspeicher 50 abgelegt.

In einem vierten Verfahrensschritt 320 überprüft die Steuereinrichtung 55, ob der aktuelle erste Zeitraum abgelaufen ist. Dies kann beispielsweise dadurch erfolgen, dass die Steuereinrichtung 55 überprüft, ob ein neuer Tag begonnen hat, oder ob 24 Stunden schon abgelaufen sind. Ist dies der Fall, fährt die Steuereinrichtung 55 mit einem fünften Verfahrensschritt 325 fort. Ist dies nicht der Fall, so wiederholt die Steuereinrichtung 55 den vierten Verfahrensschritt 320 so lange, bis die im vierten Verfahrensschritt 320 abgeprüfte Bedingung erfüllt ist. Auf den vierten Verfahrensschritt 320 kann auch verzichtet werden.

In dem fünften Verfahrensschritt 325 vergleicht die Steuereinrichtung 55 die für den abgelaufenen ersten Zeitraum ermittelte gemittelte Außentemperatur TM mit der vordefinierten unteren Grenztemperatur TG.. Unterschreitet die gemittelte Außentemperatur TM die untere Grenztemperatur TG, so fährt die Steuereinrichtung 55 mit einem sechsten Verfahrensschritt 330 fort. Ist die gemittelte Außentemperatur TM für den letzten abgelaufenen ersten Zeitraum größer als die untere Grenztemperatur TG, so fährt die Steuereinrichtung 55 mit einem siebten Verfahrensschritt 335 fort.

Im sechsten Verfahrensschritt 330 errechnet die Steuereinrichtung 55 auf Basis der kumulierten gelieferten Heizenergie für den letzten vorangegangen ersten Zeitraum und eines sechsten Parameters für den ersten Zeitraum benötigten mittleren Wärmebedarf. Der sechste Parameter kann wie folgt definiert sein:

Mittlerer Wärmebedarf = kumuliert gelieferte Heizenergie / Länge des ersten Zeitraums

In dem sechsten Verfahrensschritt 330 ermittelt die Steuereinrichtung 55 den maximalen Leistungsbedarf der Wärmepumpenheizung 10. Der maximale Leistungsbedarf kann durch die Steuereinrichtung 55 beispielsweise auf Grundlage der Heizgrenztemperatur des Heizkreislaufs 25, der Auslegungs-Außenlufttemperatur und eines vordefinierten zweiten Parameters bestimmt werden. Der zweite Parameter kann wie folgt definiert sein.

$$\text{Maximaler Leistungsbedarf} = (\text{Heizgrenztemperatur - Auslegungs-Außenlufttemperatur}) \times \text{mittlerer Wärmebedarf} / (\text{Heizgrenztemperatur - gemittelte Außentemperatur TM}).$$

Der maximale Leistungsbedarf spiegelt dabei den Leistungsbedarf der Wärmepumpe wider, der notwendig ist um das Gebäude zu beheizen. Die Auslegungs-Außenlufttemperatur ist geographisch abhängig und ist mit einem vordefiniertem Wert in dem Datenspeicher 50 abgelegt. Je nach Aufstellungsort der Wärmepumpenheizung 10 ist entsprechend zum geographischen Aufstellungsort des Gebäudes 20 die vordefinierte Auslegungs-Außenlufttemperatur festgelegt. Die Auslegungs-Außenlufttemperatur stellt die an dem Aufstellungsort in einem durchschnittlichen Jahr niedrigste Außenlufttemperatur dar.

Die Steuereinrichtung 55 legt im Datenspeicher 50 den ermittelten maximalen Leistungsbedarf ab.

In einem achten Verfahrensschritt 340, der auf den sechsten Verfahrensschritt 330 folgt, überprüft die Steuereinrichtung 55, ob der im sechsten Verfahrensschritt 330 ermittelte maximale Leistungsbedarf vom mittleren Wärmebedarf um wenigstens den vordefinierten vierten Schwellenwert S4 abweicht. Weicht der ermittelte maximale Leistungsbedarf um einen Wert größer dem vordefinierten vierten Schwellenwert S4 von dem mittleren Wärmebedarf ab, fährt die Steuereinrichtung 55 mit einem neunten Verfahrensschritt 345 fort. Ist die Abweichung des ermittelten maximalen Leistungsbedarfs von dem mittleren Wärmebedarf geringer als der vierte vordefinierte Schwellenwert S4, fährt die Steuereinrichtung 55 mit dem siebten Verfahrensschritt 335 fort.

Im siebten Verfahrensschritt 335 ermittelt die Steuereinrichtung 55 auf Grundlage des im Datenspeicher 50 abgelegten fünften Parameters auf Grundlage des ermittelten maximalen Leistungsbedarfs und der vordefinierten (gewünschten) Temperaturdifferenz einen Nennvolumenstrom durch den Heizkreislauf 25. Die Temperaturdifferenz entspricht einer Temperaturdifferenz zwischen der Vorlauftemperatur P des dritten Wärmeträgermediums 145 und einer Rücklauftemperatur des dritten Wärmeträgermediums 145, mit der das dritte Wärmeträgermedium 145 in die zweite Sekundärseite 140 des Kondensators 115 einströmt. Der fünfte Parameter kann beispielsweise wie folgt als mathematische Formel definiert sein:

$$\text{Nennvolumenstrom} = \text{maximaler Leistungsbedarf} / 4{,}2 / \text{Temperaturdifferenz} \times 3{,}6$$

Im neunten Verfahrensschritt 345 überprüft die Steuereinrichtung 55 für den zweiten vorangegangenen Zeitraum, beispielsweise 30 Tage, ob für jeden der im zweiten Zeitraum enthaltenen ersten Zeiträume jeweils Informationen für jeweils diese ersten Zeiträume und für jeweils den ersten Zeitraum ermittelten gemittelten Außentemperatur TM und gemittelten Durchfluss im Datenspeicher 50 abgelegt sind.

Ist dies der Fall, ermittelt die Steuereinrichtung 55 auf Grundlage des dritten Parameters und des für jeden im zweiten Zeitraum abgelegten einem ersten Zeitraum zugeordneten gemittelten Außentemperatur TM und der jeweils zugeordneten kumuliert gelieferten Heizenergie für jeden im zweiten Zeitraum liegenden ersten Zeitraum jeweils den maximalen Leistungsbedarf für den jeweils zugeordneten ersten Zeitraum. Ist die im neunten Verfahrensschritt 345 gesetzte Bedingung nicht erfüllt, fährt die Steuereinrichtung 55 direkt mit dem siebten Verfahrensschritt 335 fort.

Ist die Bedingung erfüllt ermittelt die Steuereinrichtung 55 auf Grundlage einer als vierten Parameter ausgebildeten Mittelwertfunktion, beispielweise eines arithmetischen Mittels, einen gemittelten maximalen Leistungsbedarf auf Basis der im zweiten Zeitraum zugeordneten für jeden ersten Zeitraum berechneten maximalen Leistungsbedarfe.

Die Steuereinrichtung 55 ersetzt im neunten Verfahrensschritt 345 den im sechsten Verfahrensschritt 330 berechneten maximalen Leistungsbedarf des vorangegangenen ersten Zeitraums im Datenspeicher 50 durch den gemittelten maximalen Leistungsbedarf. Auf den neunten Verfahrensschritt 345 fährt die Steuereinrichtung 55 mit dem siebten Verfahrensschritt 335 fort.

In einem auf den siebten Verfahrensschritt 335 folgenden zehnten Verfahrensschritt 350 vergleicht die Steuereinrichtung 55 die ermittelte durchschnittliche/gemittelte Außentemperatur TM für den vorangegangenen letzten ersten Zeitraum mit dem zweiten Schwellenwert S2. Der zweite Schwellenwert S2 weist einen höheren Temperaturwert auf als die untere Grenztemperatur TG. Unterschreitet die gemittelte Außentemperatur TM den zweiten Schwellenwert S2, so fährt die Steuereinrichtung 55 mit einem elften Verfahrensschritt 355 fort. Überschreitet die ermittelte gemittelte Außentemperatur TM den zweiten Schwellenwert S2, so fährt die Steuereinrichtung 55 mit einem siebzehnten Verfahrensschritt 385 fort.

Im elften Verfahrensschritt 355 vergleicht die Steuereinrichtung 55 den im vorangegangenen letzten ersten Zeitraum ermittelten gemittelten Heizvolumenstrom VM (berechnet im zweiten Verfahrensschritt 310) mit dem ersten vordefinierten Schwellenwert S1. Der erste vordefinierte Schwellenwert S1 kann beispielsweise einen Wert aufweisen, der der Hälfte des im siebten Verfahrensschritt 335 berechneten Nennvolumenstroms entspricht. Ist der gemittelte Heizvolumenstrom VM (berechnet im zweiten Verfahrensschritt 310) größer als der vordefinierte erste Schwellenwert S1, fährt die Steuereinrichtung 55 mit einem zwölften Verfahrensschritt 360 fort. Ist der ermittelte gemittelte Heizvolumenstrom VM für den letzten vorangegangenen ersten Zeitraum kleiner als der vordefinierte erste Schwellenwert S1, so wird mit einem dreizehnten Verfahrensschritt 365 fortgefahren.

Im zwölften Verfahrensschritt 360 adaptiert die Steuereinrichtung 55 die im Datenspeicher 50 abgespeicherte (vordefinierte) Heizkurve 165 zur Wetterkompensation der Heizkurve derartig, dass der obere Endpunkt 185 zum oberen ersten adaptierten Endpunkt 195 abgesenkt wird. Ferner adaptiert die Steuereinrichtung 55 den im Datenspeicher 50 abgelegten Fußpunkt 180 derartig, dass der abgelegte Fußpunkt 180 zum ersten adaptierten Fußpunkt 205 abgesenkt wird. Die Absenkung des oberen Endpunkts 185 und des Fußpunkts 180 erfolgt um den gleichen Wert.

Der erste adaptierte obere Endpunkt 195 und der erste adaptierte Fußpunkt 205 definieren eine erste adaptierte Heizkurve 200. Dadurch wird die Heizkurve 165 in einer Parallelverschiebung zu der ersten adaptieren Heizkurve 200 abgesenkt.

Der erste adaptierte obere Endpunkt 195 kann beispielsweise wie folgt mittels des ersten Parameters ermittelt werden:

$$\text{Adaptierter Endpunkt 195, 196} = (\text{Heizgrenztemperatur} - \text{gemittelte Außentemperatur TM}) / (\text{Heizgrenztemperatur} - \text{Auslegungs-Außenlufttemperatur})$$

Der erste Parameter gibt damit eine Änderung der Vorlauftemperatur P des dritten Wärmeträgermediums im Heizkreislauf 25 bei der Auslegungs-Außenlufttemperatur vor.

Der erste adaptierte Fußpunkt 205 kann beispielsweise wie folgt mittels eines weiteren ersten Parameters ermittelt werden:

$$\text{Adaptierter Fußpunkt 205, 206} = (\text{gemittelte Außentemperatur TM} - \text{Auslegungs-Außenlufttemperatur}) / (\text{Heizgrenztemperatur} - \text{Auslegungs-Außenlufttemperatur})$$

Der weitere erste Parameter gibt damit eine Änderung Vorlauftemperatur P des dritten Wärmeträgermediums 145 im Heizkreislauf 25 bei der Heizgrenztemperatur vor.

Auf den zwölften Verfahrensschritt 360 wird mit dem siebzehnten Verfahrensschritt 385 fortgefahren.

Der folgende dreizehnte und vierzehnte Verfahrensschritt 365, 370 können identisch zu dem sechsten Verfahrensschritt 330 ausgebildet sein.

Der dreizehnte Verfahrensschritt 365 wird nur dann durchgeführt, wenn die Steuereinrichtung 55 in dem Durchlauf des Verfahrens den neunten Verfahrensschritt 345 durchgeführt hat. In diesem Fall berechnet die Steuereinrichtung 55 einen erwarteten mittleren Leistungsbedarf auf Basis des gemittelten maximalen Leistungsbedarfs, der ermittelten durchschnittlichen Außentemperatur TM und eines vordefinierten dritten Parameters und verwendet den im neunten Verfahrensschritt 345 ermittelten gemittelten maximalen Leistungsbedarf zur Berechnung des erwarteten mittleren Leistungsbedarfs. Wurde der neunte Verfahrensschritt 345 nicht durchgeführt springt das Verfahren zum siebzehnten Verfahrensschritt 385.

Der vordefinierte dritte Parameter kann beispielsweise als folgende Formel definiert sein:

$$\text{Erwarteter (mittlere) Leistungsbedarf} = \text{maximaler gemittelter Leistungsbedarf} \times (\text{Gleichgewichtstemperatur} - \text{gemittelte Außentemperatur TM}) / \text{Gleichgewichtstemperatur} - \text{Auslegungs-Außenlufttemperatur}).$$

In einem auf den dreizehnten Verfahrensschritt 365 folgenden vierzehnten Verfahrensschritt 370 vergleicht die Steuereinrichtung 55 ermittelten durchschnittlichen Wärmebedarf mit dem (im dreizehnten Verfahrensschritt 365 ermittelten erwarteten Leistungsbedarf. Der ermittelte mittlere Wärmebedarf spiegelt dabei einen Energiebedarf pro Zeiteinheit (in der Ausführungsform pro ersten Zeitraum) wider (und hat daher die Ws/s). Der erwartete mittlere Leistungsbedarf hat die SI-Einheit W.

Überschreitet der mittlere Wärmebedarf den erwarteten Leistungsbedarf, so fährt die Steuereinrichtung 55 mit einem fünfzehnten Verfahrensschritt 375 fort. Unterschreitet der erwartete Leistungsbedarf den ermittelten mittlere Wärmebedarf, so fährt die Steuereinrichtung 55 mit dem siebzehnten Verfahrensschritt 385 fort.

Im fünfzehnten Verfahrensschritt 375 adaptiert die Steuereinrichtung 55 die vordefinierte Heizkurve 165 auf Basis des ersten Parameters und des weiteren ersten Parameters derart, dass der Fußpunkt 180 zum adaptierten zweiten Fußpunkt 206 angehoben und der obere Endpunkt 185 zum adaptierten oberen zweiten Endpunkt 196 angehoben wird. Dadurch wird die Heizkurve 165 in einer Parallelverschiebung zu einer zweiten adaptierten Heizkurve 207 angehoben.

In dem sechzehnten Verfahrensschritt 380 überschreibt die Steuereinrichtung 55 die im Datenspeicher abgelegte Heizkurve 165 mit der adaptierten Heizkurve 200, 207. Bei einer Wiederholung des oben beschriebenen Verfahrens gilt dann die im Datenspeicher 50 neu abgespeicherte adaptierte Heizkurve 200, 207 als vordefinierte Heizkurve 165.

Im siebzehnten Verfahrensschritt 385 steuert die Steuereinrichtung 55 die Wärmepumpenheizung 10, insbesondere den Verdichter 120, und entsprechend gegebenenfalls die Förderpumpe 100 auf Grundlage der adaptierten Heizkurve 200, 207.

Die oben beschriebene Wärmepumpenheizung 10 und das in Figur 3 beschriebene Verfahren haben den Vorteil, dass auf einfache Weise die Wärmepumpenheizung 10 verbessert an die lokalen Gegebenheiten angepasst wird und selbstlernend ausgebildet ist. Dadurch wird dem Nutzer des Gebäudes 20 ein besonders angenehmes Raumgefühl bereitgestellt. Ferner wird ein Überhitzen der Räume 15 oder ein zu geringes Heizen der Räume 15 vermieden. Ferner wird auf einfache Weise eine selbstlernende Anpassung an eine vorherrschende Wetterlage bereitgestellt.

**Patentansprüche**

1. Verfahren zum Betrieb einer Wärmepumpenheizung (10) eines Gebäudes (20), wobei ein gemittelter Heizvolumenstrom (VM) eines Heizkreislaufs (25) der Wärmepumpenheizung (10) bestimmt wird, vorzugsweise auf Grundlage eines über einen vordefinierten ersten Zeitraum ermittelten und/oder aufgezeichneten Heizvolumenstroms (V) des Heizkreislaufs (25) der Wärmepumpenheizung (10), wobei der gemittelte Heizvolumenstrom (VM) mit einem vordefinierten ersten Schwellenwert (S1) in einem ersten Vergleich verglichen wird,

   **dadurch gekennzeichnet, dass** eine gemittelte Außentemperatur (TM) bestimmt wird, vorzugsweise auf Grundlage einer über den vordefinierten ersten Zeitraum in regelmäßigem Zeitabstand ermittelten und/oder aufgezeichneten Außentemperatur (T) außerhalb des Gebäudes (20), wobei die gemittelte Außentemperatur (TM) mit einem vordefinierten zweiten Schwellenwert (S2) verglichen wird, wobei in Abhängigkeit des ersten Vergleichs und bei Unterschreiten des vordefinierten zweiten Schwellenwerts (S2) eine vordefinierte Heizkurve (165) der Wärmepumpenheizung (10) auf Grundlage der gemittelten Außentemperatur (TM) und insbesondere eines vordefinierten ersten Parameters adaptiert wird, wobei auf Grundlage der adaptierten Heizkurve (200, 207) die Wärmepumpenheizung (10) gesteuert wird.

2. Verfahren nach Anspruch 1, wobei die vordefinierte Heizkurve (165) wenigstens einen Sollwert (180, 185) aufweist, wobei bei Unterschreiten des vordefinierten zweiten Schwellenwerts (S2) durch die gemittelte Außentemperatur (TM) der wenigstens eine Sollwert (180, 185) abgesenkt wird, wobei eine adaptierte Heizkurve (200) auf Grundlage des abgesenkten Sollwerts (180, 185, 180) bestimmt wird.

3. Verfahren nach Anspruch 1 oder 2, wobei die vordefinierte Heizkurve (165) eine Vorlauftemperatur (P) in Abhängigkeit zu der Außentemperatur (T) abbildet und wenigstens einen Sollwert (180, 185) aufweist, wobei bei Unterschreiten des vordefinierten zweiten Schwellenwerts S2 ) durch die gemittelte Außentemperatur (TM) der wenigstens eine Sollwert (180, 185) angehoben wird, wobei eine adaptierte Heizkurve (207) auf Grundlage des angehobenen Sollwerts (180, 185, 180) bestimmt wird.

4. Verfahren nach einem der vorhergehenden Ansprüche, wobei die gemittelte Außentemperatur (TM) mit einer vordefinierten unteren Grenztemperatur (TG) verglichen wird, wobei bei Unterschreiten der vordefinierten Grenztemperatur (TG) durch die gemittelte Außentemperatur (TM) auf Grundlage einer vordefinierten Auslegungs-Außenlufttemperatur der Wärmepumpenheizung (10), der gemittelten Außentemperatur (TM) und eines mittleren Wärmebedarfs der Wärmepumpenheizung (10) sowie eines zweiten Parameters, ein maximaler Leistungsbedarf der Wärmepumpenheizung (10) im ersten Zeitraum ermittelt wird, vorzugsweise wobei der mittlere Wärmebedarf der Wärmepumpenheizung (10) in dem ersten Zeitraum ermittelt wird.

5. Verfahren nach Anspruch 4, wobei der ermittelte maximale Leistungsbedarf mit dem mittleren Wärmebedarf der Wärmepumpenheizung (10) verglichen wird, wobei bei einem Abweichen des ermittelten maximalen Leistungsbedarfs von dem mittleren Wärmebedarf um mindestens einen vordefinierten vierten Schwellenwert (S4) der ermittelte maximale Leistungsbedarf auf Grundlage eines vordefinierten vierten Parameters angepasst wird.

6. Verfahren nach Anspruch 5, wobei für einen zweiten Zeitraum, der sich über wenigstens zwei aufeinanderfolgende erste Zeiträume erstreckt, auf Basis des zu dem jeweils ersten Zeitraum zugeordneten ermittelten maximalen Leistungsbedarfs ein gemittelter maximaler Leistungsbedarf über den zweiten Zeitraum ermittelt wird, wobei bei Abweichen des ermittelten maximalen Leistungsbedarfs von dem mittleren Wärmebedarf um mindestens einen vordefinierter vierten Schwellenwert (S4) der ermittelte maximale Leistungsbedarf durch den ermittelten gemittelten maximalen Leistungsbedarf ersetzt wird.

7. Verfahren nach Anspruch 5 oder 6, wobei auf Grundlage eines vordefinierten dritten Parameters, des maximalen gemittelten Leistungsbedarfs und der gemittelten Außentemperatur (TM) ein erwarteter mittlerer Leistungsbedarf der Wärmepumpenheizung (10) ermittelt wird, wobei der mittleren Wärmebedarf des Wärmepumpenkreislaufs (30) mit dem erwarteten mittleren Leistungsbedarf verglichen wird, wobei bei Überschreitung des mittleren Wärmebedarfs durch den erwarteten mittleren Leistungsbedarf der wenigstens eine Sollwert (180, 185) der Heizkurve (165) zu dem adaptierten Sollwert angehoben wird, wobei auf Grundlage des angehobenen Sollwerts (196, 206) die adaptierte Heizkurve (207) bestimmt wird.

8. Verfahren nach einem der Ansprüche 4 bis 7, wobei auf Grundlage der gelieferten Energie, einer vordefinierten Temperaturdifferenz zwischen einer Vorlauftemperatur (P) und einer Rücklauftemperatur und eines vordefinierten fünften Parameters ein NennHeizvolumenstrom in einem Heizkreislauf (25) ermittelt wird, wobei der erste Schwellenwert (S1) dem halben NennHeizvolumenstrom entspricht.

9. Verfahren nach einem der vorhergehenden Ansprüche, wobei der vordefinierte erste Zeitraum sich über einen Zeitraum eines Tages oder über einen Zeitraum von 24 Stunden erstreckt.

10. Steuergerät (40) für eine Wärmepumpenheizung (10), **dadurch gekennzeichnet, dass** das Steuergerät (40) ausgebildet ist, das Verfahren nach einem der vorhergehenden Ansprüche durchzuführen.

11. Wärmepumpenheizung (10), aufweisend ein Steuergerät (40), **dadurch gekennzeichnet, dass** das Steuergerät (40) nach Anspruch 10 ausgebildet ist.

12. Wärmepumpenheizung (10) nach Anspruch 11, aufweisend einen Heizkreislauf (25) und einen Wärmepumpenkreislauf (30), wobei das Steuergerät (40) eine Steuereinrichtung (55), einen mit der Steuereinrichtung (55) verbundenen Datenspeicher (50) und eine mit der Steuereinrichtung (55) verbundene Schnittstelle (60) aufweist, wobei in dem Datenspeicher (50) der vordefinierte erste Schwellenwert (S1) und die vordefinierte Heizkurve (165) abgespeichert sind, wobei der Heizkreislauf (25) ein in einem Kreislauf zirkulierbares Wärmeträgermedium (145) umfasst, wobei das Wärmeträgermedium (145) thermisch mit dem Wärmepumpenkreislauf (30) verbunden und ausgebildet ist, Wärme zur Beheizung wenigstens eines Raums (15) eines Gebäudes (20) vom Wärmepumpenkreislauf (30) zu übertragen, wobei die Steuereinrichtung (55) ausgebildet ist, den Wärmepumpenkreislauf (30) auf Grundlage der adaptierten Heizkurve (165) zu steuern.

13. Wärmepumpenheizung (10) nach Anspruch 12, aufweisend eine Heizvolumenstromermittlungseinheit (155), wobei die Heizvolumenstromermittlungseinheit (155) mit der Schnittstelle (60) verbunden und ausgebildet ist, einen Heizvolumenstrom des Wärmeträgermediums (145) zu ermitteln und eine Information über den ermittelten Heizvolumenstroms (V) der Steuereinrichtung (55) bereitzustellen, wobei die Steuereinrichtung (55) ausgebildet ist, auf Grundlage des ermittelten Heizvolumenstroms (V) einen gemittelten Heizvolumenstrom (VM) über den vordefinierten ersten Zeitraum zu bestimmen.

14. Wärmepumpenheizung (10) nach Anspruch 12 oder 13, aufweisend einen mit der Schnittstelle (60) verbundenen Außentemperatursensor (45), wobei der Außentemperatursensor (45) ausgebildet ist, eine Außentemperatur (T) zu messen und eine Information über die gemessene Außentemperatur (T) der Steuereinrichtung (55) bereitzustellen, wobei die Steuereinrichtung (55) ausgebildet ist, über einen vordefinierten ersten Zeitraum die Außentemperatur (T) zu erfassen und auf Grundlage der ermittelten Außentemperatur (T) über den ersten Zeitraum die gemittelte Außentemperatur (TM) über den vordefinierten ersten Zeitraum zu bestimmen.

**Claims**

1. Method for operating a heat-pump heating arrangement (10) for a building (20), wherein an averaged heating volumetric flow rate (VM) of a heating circuit (25) of the heat-pump heating arrangement (10) is determined, preferably on the basis of a heating volumetric flow rate (V) of the heating circuit (25) of the heat-pump heating arrangement (10) that is ascertained and/or recorded over a predefined first period of time, wherein the averaged heating volumetric flow rate (VM) is compared with a predefined first threshold value (S1) in a first comparison, **characterized in that** an averaged external temperature (TM) is determined, preferably on the basis of an external temperature (T) outside the building (20) that is ascertained and/or recorded at regular time intervals over the predefined first period of time, wherein the averaged external temperature (TM) is compared with a predefined second threshold value (S2), wherein, in a manner dependent on the first comparison and in the case of the predefined second threshold value (S2) being fallen below, a predefined heating curve (165) of the heat-pump heating arrangement (10) is adapted on the basis of the averaged external temperature (TM) and in particular of a predefined first parameter, wherein the heat-pump heating arrangement (10) is controlled on the basis of the adapted heating curve (200, 207).

2. Method according to Claim 1, wherein the predefined heating curve (165) has at least one target value (180, 185), wherein, in the case of the averaged external temperature (TM) falling below the predefined second threshold value (S2), the at least one target value (180, 185) is lowered, wherein an adapted heating curve (200) is determined on the basis of the lowered target value (180, 185, 180).

3. Method according to Claim 1 or 2, wherein the predefined heating curve (165) depicts a feed temperature (P) as a function of the external temperature (T) and has at least one target value (180, 185), wherein, in the case of the averaged external temperature (TM) falling below the predefined second threshold value (S2), the at least one target value (180, 185) is raised, wherein an adapted heating curve (207) is determined on the basis of the raised target value (180, 185, 180).

4. Method according to one of the preceding claims, wherein the averaged external temperature (TM) is compared with a predefined lower limit temperature (TG), wherein, in the case of the averaged external temperature (TM) falling below the predefined limit temperature (TG), a maximum power demand of the heat-pump heating arrangement (10) in the first period of time is ascertained on the basis of a predefined design outside-air temperature of the heat-pump heating arrangement (10), of the averaged external temperature (TM), and of an average heat demand of the heat-pump heating arrangement (10), and also of a second parameter, preferably wherein the average heat demand of the heat-pump heating arrangement (10) in the first period of time is ascertained.

5. Method according to Claim 4, wherein the ascertained maximum power demand is compared with the average heat demand of the heat-pump heating arrangement (10), wherein, in the case of the ascertained maximum power demand deviating from the average heat demand by at least a predefined fourth threshold value (S4), the ascertained maximum power demand is adapted on the basis of a predefined fourth parameter.

6. Method according to Claim 5, wherein, for a second period of time, which extends over at least two successive first periods of time, an averaged maximum power demand over the second period of time is ascertained on the basis of the ascertained maximum power demand associated with the in each case first period of time, wherein, in the case of the ascertained maximum power demand deviating from the average heat demand by at least a predefined fourth threshold value (S4), the ascertained maximum power demand is replaced by the ascertained averaged maximum power demand.

7. Method according to Claim 5 or 6, wherein an expected average power demand of the heat-pump heating arrangement (10) is ascertained on the basis of a predefined third parameter, of the maximum averaged power demand, and of the averaged external temperature (TM), wherein the average heat demand of the heat-pump circuit (30) is compared with the expected average power demand, wherein, in the case of the expected average power demand exceeding the average heat demand, the at least one target value (180, 185) of the heating curve (165) is raised to the adapted target value, wherein the adapted heating curve (207) is determined on the basis of the raised target value (196, 206).

8. Method according to one of Claims 4 to 7, wherein a nominal heating volumetric flow rate in a heating circuit (25) is ascertained on the basis of the delivered energy, of a predefined temperature difference between a feed temperature (P) and a return temperature, and of a predefined fifth parameter, wherein the first threshold value (S1) corresponds to half the nominal heating volumetric flow rate.

9. Method according to one of the preceding claims, wherein the predefined first period of time extends over a period of time of one day or over a period of time of 24 hours.

10. Control unit (40) for a heat-pump heating arrangement (10), **characterized in that** the control unit (40) is configured to carry out the method according to one of the preceding claims.

11. Heat-pump heating arrangement (10) having a control unit (40), **characterized in that** the control unit (40) is configured according to Claim 10.

12. Heat-pump heating arrangement (10) according to Claim 11, having a heating circuit (25) and a heat-pump circuit (30), wherein the control unit (40) has a control device (55), has a data memory (50) connected to the control device (55) and has an interface (60) connected to the control device (55), wherein the predefined first threshold value (S1) and the predefined heating curve (165) are stored in the data memory (50), wherein the heating circuit (25) comprises a heat transfer medium (145) which can be circulated in a circuit, wherein the heat transfer medium (145) is connected thermally to the heat-pump circuit (30) and is configured to transfer heat for heating at least one room (15) of a building (20) from the heat-pump circuit (30), wherein the control device (55) is configured to control the heat-pump circuit (30) on the basis of the adapted heating curve (165).

13. Heat-pump heating arrangement (10) according to Claim 12, having a heating volumetric flow rate-ascertaining unit (155), wherein the heating volumetric flow rate-ascertaining unit (155) is connected to the interface (60) and is configured to ascertain a heating volumetric flow rate of the heat transfer medium (145) and to provide the control device (55) with information concerning the ascertained heating volumetric flow rate (V), wherein the control device (55) is configured to determine an averaged heating volumetric flow rate (VM) over the predefined first period of time on the basis of the ascertained heating volumetric flow rate (V).

14. Heat-pump heating arrangement (10) according to Claim 12 or 13, having an external temperature sensor (45) which is connected to the interface (60), wherein the external temperature sensor (45) is configured to measure an external temperature (T) and to provide the control device (55) with information concerning the measured external temperature (T), wherein the control device (55) is configured to detect the external temperature (T) over a predefined first period of time and to determine the averaged external temperature (TM) over the predefined first period of time on the basis of the ascertained external temperature (T) over the first period of time.

**Revendications**

1. Procédé permettant de faire fonctionner un chauffage par pompe à chaleur (10) d'un bâtiment (20), dans lequel un débit volumique de chauffage moyenné (VM) d'un circuit de chauffage (25) du chauffage par pompe à chaleur (10) est déterminé, de préférence sur la base d'un débit volumique de chauffage (V) du circuit de chauffage (25) du chauffage par pompe à chaleur (10), établi et/ou enregistré pendant une première période prédéfinie, le débit volumique de chauffage moyenné (VM) étant comparé avec une première valeur seuil prédéfinie (S1) dans une première comparaison,
**caractérisé en ce qu'**une température extérieure moyennée (TM) est déterminée, de préférence sur la base d'une température extérieure (T) établie et/ou enregistrée pendant une première période prédéfinie à intervalles réguliers à l'extérieur du bâtiment (20), la température extérieure moyennée (TM) étant comparée avec une deuxième valeur seuil prédéfinie (S2), dans lequel, en fonction de la première comparaison et en cas de passage en dessous de la deuxième valeur seuil prédéfinie (S2), une courbe de chauffage prédéfinie (165) du chauffage par pompe à chaleur (10) est adaptée sur la base de la température extérieure moyennée (TM) et en particulier d'un premier paramètre prédéfini, le chauffage par pompe à chaleur (10) étant commandé sur la base de la courbe de chauffage adaptée (200, 207).

2. Procédé selon la revendication 1, dans lequel la courbe de chauffage prédéfinie (165) présente au moins une valeur théorique (180, 185), dans lequel, en cas de passage en dessous de la deuxième valeur seuil prédéfinie (S2) par la température extérieure moyennée (TM), ladite au moins une valeur théorique (180, 185) est abaissée, une courbe de chauffage adaptée (200) étant déterminée sur la base de la valeur théorique abaissée (180, 185, 180) .

3. Procédé selon la revendication 1 ou 2, dans lequel la courbe de chauffage prédéfinie (165) représente une température aller (P) en fonction de la température extérieure (T) et présente au moins une valeur théorique (180, 185), dans lequel, en cas de passage en dessous de la deuxième valeur seuil prédéfinie (S2) par la température extérieure moyennée (TM), ladite au moins une valeur théorique (180, 185) est relevée, une courbe de chauffage adaptée (207) étant déterminée sur la base de la valeur théorique relevée (180, 185, 180).

4. Procédé selon l'une quelconque des revendications précédentes, dans lequel la température extérieure moyennée (TM) est comparée avec une température limite inférieure prédéfinie (TG), dans lequel, en cas de passage en dessous de la température limite prédéfinie (TG) par la température extérieure moyennée (TM), sur la base d'une température d'air extérieur de conception prédéfinie du chauffage par pompe à chaleur (10), de la température extérieure moyennée (TM) et d'une demande en chaleur moyenne du chauffage par pompe à chaleur (10) ainsi que d'un deuxième paramètre, une demande en puissance maximale du chauffage par pompe à chaleur (10) dans la première période est établie, la demande en chaleur moyenne du chauffage par pompe à chaleur (10) étant de préférence établie dans la première période.

5. Procédé selon la revendication 4, dans lequel la demande en puissance maximale établie est comparée avec la demande en chaleur moyenne du chauffage par pompe à chaleur (10), dans lequel, en cas d'écart de la demande en puissance maximale établie par rapport à la demande en chaleur moyenne d'au moins une quatrième valeur seuil prédéfinie (S4), la demande en puissance maximale établie est adaptée sur la base d'un quatrième paramètre prédéfini.

6. Procédé selon la revendication 5, dans lequel, pour une deuxième période qui s'étend sur au moins deux premières périodes consécutives, sur la base de la demande en puissance maximale établie associée à la première période respectivement, une demande en puissance maximale moyennée pendant la deuxième période est établie, dans lequel, en cas d'écart de la demande en puissance maximale établie par rapport à la demande en chaleur moyenne d'au moins une quatrième valeur seuil prédéfinie (S4), la demande en puissance maximale établie est remplacée par la demande en puissance maximale moyennée établie.

7. Procédé selon la revendication 5 ou 6, dans lequel, sur la base d'un troisième paramètre prédéfini, de la demande en puissance moyennée maximale et de la température extérieure moyennée (TM), une demande en puissance moyenne attendue du chauffage par pompe à chaleur (10) est établie, la demande en chaleur moyenne du circuit de pompe à chaleur (30) est comparée avec la demande en puissance moyenne attendue, dans lequel, en cas de dépassement de la demande en chaleur moyenne par la demande en puissance moyenne attendue, ladite au moins une valeur théorique (180, 185) de la courbe de chauffage (165) est relevée jusqu'à la valeur théorique adaptée, la courbe de chauffage adaptée (207) étant déterminée sur la base de la valeur théorique relevée (196, 206).

8. Procédé selon l'une quelconque des revendications 4 à 7, dans lequel, sur la base de l'énergie fournie, d'une différence de température prédéfinie entre une température aller (P) et une température retour et d'un cinquième paramètre prédéfini, un débit volumique de chauffage nominal dans un circuit de chauffage (25) est établi, la première valeur seuil (S1) correspondant à la moitié du débit volumique de chauffage nominal.

9. Procédé selon l'une quelconque des revendications précédentes, dans lequel la première période prédéfinie s'étend sur une période d'une journée ou sur une période de 24 heures.

10. Appareil de commande (40) destiné à un chauffage par pompe à chaleur (10), **caractérisé en ce que** l'appareil de commande (40) est réalisé pour exécuter le procédé selon l'une quelconque des revendications précédentes.

11. Chauffage par pompe à chaleur (10), présentant un appareil de commande (40), **caractérisé en ce que** l'appareil de commande (40) est réalisé selon la revendication 10.

12. Chauffage par pompe à chaleur (10) selon la revendication 11, présentant un circuit de chauffage (25) et un circuit de pompe à chaleur (30), l'appareil de commande (40) présentant un dispositif de commande (55), une mémoire de données (50) reliée au dispositif de commande (55) et une interface (60) reliée au dispositif de commande (55), la première valeur seuil prédéfinie (S1) et la courbe de chauffage prédéfinie (165) étant mémorisées dans la mémoire de données (50), le circuit de chauffage (25) comprenant un fluide caloporteur (145) pouvant circuler dans un circuit, le fluide caloporteur (145) étant relié thermiquement au circuit de pompe à chaleur (30) et étant réalisé pour transmettre de la chaleur destinée à chauffer au moins une pièce (15) d'un bâtiment (20) à partir du circuit de pompe à chaleur (30), le dispositif de commande (55) étant réalisé pour commander le circuit de pompe à chaleur (30) sur la base de la courbe de chauffage adaptée (165).

**13.** Chauffage par pompe à chaleur (10) selon la revendication 12, présentant une unité d'établissement de débit volumique de chauffage (155), l'unité d'établissement de débit volumique de chauffage (155) étant reliée à l'interface (60) et étant réalisée pour établir un débit volumique de chauffage du fluide caloporteur (145) et pour fournir une information concernant le débit volumique de chauffage établi (V) au dispositif de commande (55), le dispositif de commande (55) étant réalisé pour déterminer sur la base du débit volumique de chauffage établi (V) un débit volumique de chauffage moyenné (VM) pendant la première période prédéfinie.

**14.** Chauffage par pompe à chaleur (10) selon la revendication 12 ou 13, présentant un capteur de température extérieure (45) relié à l'interface (60), le capteur de température extérieure (45) étant réalisé pour mesurer une température extérieure (T) et pour fournir une information concernant la température extérieure mesurée (T) au dispositif de commande (55), le dispositif de commande (55) étant réalisé pour détecter pendant une première période prédéfinie la température extérieure (T) et pour déterminer sur la base de la température extérieure établie (T) pendant la première période, la température extérieure moyennée (TM) pendant la première période prédéfinie.

Fig. 1

Fig. 2

EP 3 690 593 B1

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010053211 A1